(19) **Europäisches Patentamt**
**European Patent Office**
**Office européen des brevets**

(11) **EP 2 145 203 B1**

(12) **EUROPÄISCHE PATENTSCHRIFT**

(45) Veröffentlichungstag und Bekanntmachung des Hinweises auf die Patenterteilung:
**13.07.2011 Patentblatt 2011/28**

(51) Int Cl.:
*G01S 3/805* (2006.01) *G01S 3/808* (2006.01)
*G10K 11/34* (2006.01) *G01S 11/14* (2006.01)

(21) Anmeldenummer: **08734981.7**

(22) Anmeldetag: **03.04.2008**

(86) Internationale Anmeldenummer:
**PCT/EP2008/002640**

(87) Internationale Veröffentlichungsnummer:
**WO 2008/138433 (20.11.2008 Gazette 2008/47)**

(54) **VERFAHREN ZUM PEILEN EINES SCHALLABSTRAHLENDEN ZIELS**

METHOD FOR LOCATING A SOUND-PROJECTING TARGET

PROCÉDÉ DE RELÈVEMENT D'UNE CIBLE À RAYONNEMENT ACOUSTIQUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **14.05.2007 DE 102007022563**

(43) Veröffentlichungstag der Anmeldung:
**20.01.2010 Patentblatt 2010/03**

(73) Patentinhaber: **ATLAS Elektronik GmbH**
**28309 Bremen (DE)**

(72) Erfinder: **SCHNEIDER, Dietmar**
**28816 Stuhr (DE)**

(74) Vertreter: **Wasiljeff, Johannes M.B.**
**Jabbusch Siekmann & Wasiljeff**
**Patentanwälte**
**Otto-Lilienthal-Strasse 25**
**28199 Bremen (DE)**

(56) Entgegenhaltungen:
**EP-A- 1 308 745     DE-A1- 4 207 716**
**US-A- 4 910 719**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft ein Verfahren zum Peilen eines schallabgebenden Ziels mittels einer eine Vielzahl von elektroakustischen Wandlern aufweisenden, langgestreckten Unterwasserantenne nach dem Oberbegriff des Anspruchs 1.

Bei einem bekannten Peilverfahren zur passiven Ortung eines schallabgebenden, d. h. schallerzeugenden, schallreflektierenden oder schallstreuenden Ziels oder Objekts (EP 01 308 745 B1) wird eine sog. Linearantenne mit einer Vielzahl von aneinandergereihten, elektroakustischen Wandlern eingesetzt. Solche Linearantenne sind beispielsweise sog. Schleppantennen (Towed Arrays) oder am Schiffsrumpf oder Bootskörper angeordnete Seitenantennen (Flank Arrays). Die Linearantenne spannt einen Empfangssektor auf, innerhalb dessen einfallender Schall, der vom Ziel oder Objekt abgestrahlt wird und sich im Wasser ausbreitet, von den Wandlern empfangen wird. Um die Richtung des einfallenden Schalls zu bestimmen, wird mit den Empfangssignalen der elektroakustischen Wandler mittels eines sog. Richtungsbildners oder Beamformers ein den Empfangssektor überspannender Fächer von Richtcharakteristiken oder Beams generiert. Jede in Horizontalrichtung gegenüber einer Bezugsrichtung elektronisch schwenkbare Richtcharakteristik weist einen relativ kleinen horizontalen Öffnungswinkel und einen abhängig von der Anzahl der vertikal angeordneten elektroakustischen Wandler mehr oder weniger großen vertikalen Öffnungswinkel sowie eine Hauptrichtung mit maximaler Empfangsempfindlichkeit auf. Als Bezugsrichtung wird üblicherweise die Horizontalrichtung rechtwinklig zur Unterwasserantenne, auch als Querabrichtung bezeichnet, gewählt. Zur Erzeugung der verschiedenen Richtcharakteristiken oder Beams werden die Empfangssignale der Wandler zeitverzögert, und zwar derart, dass sie für den jeweiligen Schwenkwinkel der Hauptrichtung der Richtcharakteristik konphas sind, und die konphasen Empfangssignale werden zu die Richtcharakteristik bildenden sog. Gruppensignalen addiert. Die Verzögerungszeiten für die Empfangssignale der einzelnen Wandler werden anhand der am Antennenort gemessenen Schallgeschwindigkeit, der Lage der Wandler innerhalb der Unterwasserantenne und des Schwenkwinkels der jeweiligen Richtcharakteristik berechnet. Bei Schallempfang wird in dem Fächer der Richtcharakteristiken diejenige Richtcharakteristik aufgesucht, in der ein Schallempfangsmaximum vorhanden ist. Dies wird dadurch ermittelt, dass das Pegelmaximum der die Richtcharakteristiken bildenden Gruppensignale detektiert wird. Der Schwenkwinkel der Hauptrichtung der Richtcharakteristik wird als Zielpeilung ausgegeben. Die Zielpeilung wird numerisch oder graphisch in einer Anzeige dargestellt.

Bei solchen Linearantennen ändert sich mit dem Schwenkwinkel der Hauptrichtung der Richtcharakteristik oder der Größe des Peilwinkels sowohl der horizontale als auch der vertikale Öffnungswinkel der Richtcharakteristiken oder der Beams. Bei einem Peilwinkel von 0° querab zur Unterwasserantenne ist der horizontale Öffnungswinkel am kleinsten und der vertikale Öffnungswinkel am größten. Bei zunehmenden Peilwinkeln gegenüber der Bezugsrichtung in voraus oder nach achtern nähern sich die vertikalen und horizontalen Öffnungswinkel der Richtcharakteristiken einander an.

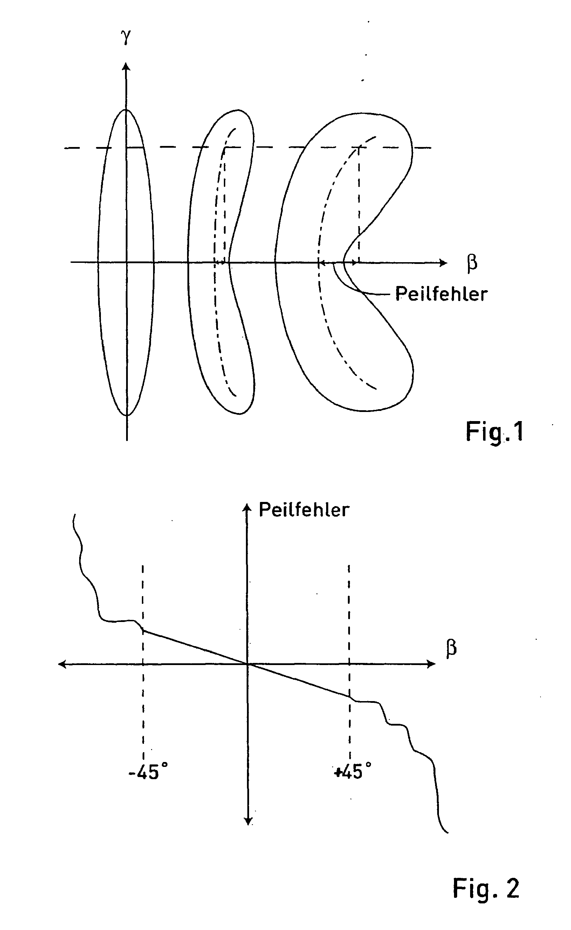

In Fig. 1 ist beispielhaft die -3dB-Konturlinie einer zielpeilenden Richtcharakteristik oder eines zielpeilenden Beams einer Linearantenne bei drei verschiedenen Schwenkwinkeln ihrer Hauptrichtung, also bei drei verschiedenen Zielpeilungen oder Peilwinkeln $\beta$, skizziert. Auf der Abszisse ist der Peilwinkel $\beta$ und auf der Ordinate ist der vertikale Schalleinfallswinkel $\gamma$ abgetragen. Während die Richtcharakteristik in Nähe der Querabrichtung ($\beta=0°$) symmetrisch ist, verbeult sich die -3dB-Konturlinie mit nach achtern oder nach voraus gepeiltem Ziel "bananenähnlich". Kommt der Schall ausschließlich aus horizontaler Richtung, dann liegt das Maximum der Richtcharakteristik immer auf der $\beta$-Koordinate, genau in der angezeigten Zielpeilung. Kommt der Schall aber auch aus einer vertikalen Richtung, wie dies beispielhaft durch die parallel zur $\beta$-Koordinate verlaufende, strichlinierte Gerade angedeutet ist, so läuft das Maximum der Richtcharakteristik längs der in Fig. 1 strichpunktiert angedeuteten Linie der maximalen Empfangsempfindlichkeit zu größeren horizontalen Peilwinkeln $\beta$, was zu einer Ablage der tatsächlichen Peilung führt, d.h. es wird prinzipiell ein zu großer Peilwinkel $\beta$ angezeigt. Der hierbei entstehende Peilfehler ist in Fig. 1 durch den Doppelpfeil auf der $\beta$-Koordinate symbolisiert. Mit zunehmender Größe der Peilung, also zunehmendem Peilwinkel, nimmt diese Ablage zu. Als Folge dessen treten bei allen linearen oder linearähnlichen Unterwasserantennen aufgrund ihres großen vertikalen Öffnungswinkels $2\Theta\text{-}_{3dB}$ von z.B. 75° ($\pm$ 37,5° nach oben und unten) und bei einem vertikalen Schalleinfall systematische Peilfehler als Funktion des Peilwinkels $\beta$ auf, wie dies im Diagramm der Fig. 2 dargestellt ist.

Bei einem bekannten Verfahren zum Ermitteln von Tiefenwerten eines Gewässerprofils aus gemessenen Impulslaufzeiten der von einem Wandlerarray abgestrahlten Sendeimpulse und den Senderichtungen (DE 42 07 716 A1) wird zur Vermeidung von Fehlern durch Vorgabe einer falschen Schallgeschwindigkeit bei der Berechnung der Tiefenwerte ein Korrekturfaktor eingeführt, mit dem die vorgegebene, an der Oberfläche des Gewässers gemessene Schallgeschwindigkeit multipliziert wird, um die reale Schallgeschwindigkeit in der Messstrecke zu erhalten. Hierzu werden für jedes Wandlerarray ausgewählte Tiefenwerte jeweils in vertikaler Lotrichtung und in einer zur Wandlerarrayebene normale Lotrichtung ermittelt und mittels der ausgewählten Tiefenwerte für alle übrigen Lotrichtungen geschätzte Tiefenwerte eines Schätzungsprofils ermittelt. Für mindestens eine der übrigen Lotrichtungen wird der geschätzte Tiefenwert mit dem aus der gemessenen Impulslaufzeit ermittelten Tiefenwert verglichen und daraus der Korrekturfaktor für die vorgegebene Schallgeschwindigkeit bestimmt.

Der Erfindung liegt die Aufgabe zugrunde, ein Verfahren zum Peilen von Zielen der eingangs genannten Art anzugeben, das weniger fehlerbehaftet ist und damit genauere Peilungen liefert.

Die Aufgabe ist erfindungsgemäß durch die Merkmale im Anspruch 1 gelöst.

Das erfindungsgemäße Verfahren hat den Vorteil, dass die insbesondere bei von querab stark abweichenden Peilwinkeln im sog. Endfire-Bereich der Unterwasserantenne auftretenden, sehr großen Peilfehler nahezu weitgehend eliminiert werden und damit in allen Peilrichtungen der linearen Unterwasserantenne gleich zuverlässige Peilungen erhalten werden. Bei großen Wassertiefen, in denen das Schallausbreitungsmodell einen Schallstrahlenverlauf berechnet, der sich in einem Winkelbereich um die gemessene Zielpeilung nicht ändert, genügt bereits eine einzige, aus dem vertikalen Schalleinfallswinkel abgeleitete Korrektur der in die Zeitverzögerungen der Empfangsignale eingehenden Schallgeschwindigkeit, um durch Anpassung der Richtcharakteristik eine sehr genaue Peilung auch im "Endfire"-Bereich zu erhalten. Bei geringen Wassertiefen, in denen sich üblicherweise das Bodenprofil des Wasserkanals in verschiedenen Peilrichtungen und damit die Schallausbreitung wesentlich ändern kann, wird durch iterative Ermittlung des vertikalen Schalleinfallswinkels und der wiederholten Korrektur der Schallgeschwindigkeit fortlaufend eine verbesserte Zielpeilung erhalten, die nach wenigen Iterationen sich einem Konvergenzwert nähert, der die fehlerminimierte Peilung zum Ziel angibt.

Zweckmäßige Ausführungsformen des erfindungsgemäßen Verfahrens mit vorteilhaften Weiterbildungen und Ausgestaltungen der Erfindung ergeben sich aus den weiteren Ansprüchen.

Gemäß einer vorteilhaften Ausführungsform der Erfindung wird als Korrekturfaktor für die Multiplikation mit der Schallausbreitungsgeschwindigkeit der Kehrwert des Kosinus des bestimmten vertikalen Schalleinfallswinkels verwendet.

Die Erfindung ist anhand eines in der Zeichnung illustrierten Ausführungsbeispiels im folgenden näher beschrieben. Es zeigen:

Fig. 1    beispielhaft eine über die Peilung oder den Peilwinkel $\beta$ und den vertikalen Schalleinfallswinkel $\gamma$ aufgetragene -3dB- Konturlinie einer Richtcharakteristik einer linearen Unterwasserantenne für drei verschiedene Peilwinkel,

Fig. 2    eine schematische Darstellung des Peilfehlers der Linearantenne in Abhängigkeit von der Peilung $\beta$,

Fig. 3    ein Blockschaltbild zur Erläuterung des Peilverfahrens,

Fig. 4    eine schematisierte Darstellung eines mittels eines Schallausbreitungsmodells innerhalb eines vertikalen Öffnungswinkels $2\Theta_{-3dB}$ der Linearantenne für einen Peilwinkel $\beta=45°$ berechneten Schallstrahlenverlaufs.

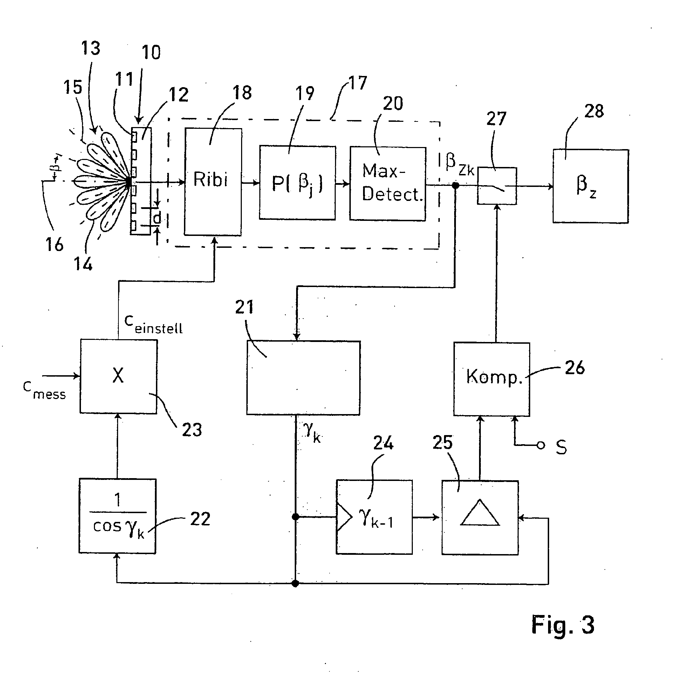

Das Verfahren zum Peilen eines schallabgebendes Ziels mittels einer langgestreckten Unterwasserantenne ist anhand des in Fig. 3 dargestellten Blockschaltbilds im folgenden näher beschrieben. Unter schallabgebendem Ziel wird dabei ein antennenortfernes Objekt verstanden, das Schall erzeugt, Schall reflektiert oder Schall zurückstreut, der sich im Wasser ausbreitet und von der Unterwasserantenne empfangen wird. Beispiele für eine langgestreckte oder lineare oder linearähnliche Unterwasserantenne sind von einem Wasserfahrzeug gezogene sog. Schleppantennen (Towed Arrays) oder am Schiffsrumpf oder Bootskörper von Unterwasserfahrzeugen angeordnete Seitenantennen (Flank Arrays) oder auch von einem Wasserfahrzeug getragene PRS-Antennen (Passiv Ranging Sonar).

Bei allen Antennensystemen wird grundsätzlich aus den Ausgangssignalen der elektroakustischen Wandler mittels einer in einer Peilvorrichtung durchgeführten Signalverarbeitung die Zielpeilung, das ist der Peilwinkel, den die gepeilte Richtung zum Ziel mit einer Bezugsrichtung, z.B. der horizontalen Senkrechten zur Unterwasserantenne einschließt, bestimmt. Hierzu ist es erforderlich, der Peilvorrichtung den aktuellen Wert der am Ort der Unterwasserantenne herrschenden Schallgeschwindigkeit einzugeben, der im allgemeinen zuvor in der Nähe der Unterwasserantenne gemessen wird. Die Peilvorrichtung ist entsprechend der verwendeten Unterwasserantenne unterschiedlich konzipiert und ist bei Verwendung einer Linearantenne mit einer Vielzahl von nebeneinander gereihten Wandlern grundsätzlich anders als bei Verwendung einer sog. PRS-Antenne, die aus drei in einem größeren Abstand voneinander angeordneten Empfangsbasen aus elektroakustischen Wandlern besteht, die untereinander fluchtend angeordnet sind. Unter dem Begriff Linearantenne sind die vorgenannten Seitenantennen und Schleppantennen subsumiert.

In Fig. 3 ist eine als Seitenantenne konzipierte Linearantenne 10 mit einer Vielzahl von nebeneinander aufgereihten elektroakustischen Wandlern 11 schematisiert dargestellt. Im allgemeinen sind die elektroakustischen Wandler 11 auf einem Antennenträger 12 mit konstantem Abstand d voneinander angeordnet. Bei einer Seitenantenne umfasst üblicherweise jeder der in der Horizontalen nebeneinander angeordneten Wandler 11, auch Stave genannt, mehrere in der Vertikalen angeordnete Wandlerelemente, wie hier nicht weiter dargestellt ist. Die Zahl der vertikalen, vorzugsweise äquidistant untereinander liegenden Wandlerelemente ist deutlich kleiner als die Zahl der zur Richtungsbildung horizontal nebeneinander gereihten Wandler 11. Die Ausgangssignale der vertikal untereinander angeordneten Wandlerelemente werden addiert und normiert und bilden die Empfangsignale der Wandler 11 oder Staves, im folgenden als Empfangssignale bezeichnet. Bei sog. Schleppantennen fehlen die vertikal untereinander angeordneten Wandlerelemente, so dass hier die Ausgangssignale der Wandler 11 unmittelbar die Empfangssignale darstellen. Die an die Ausgänge der Wandler 11 bzw. Staves angeschlossene Peilvorrichtung 17 umfasst einen Richtungsbildner 18, auch Beamformer genannt, einen Empfangspegelmesser 19 und einen Pegelmaximum-Detektor 20. Zur Zielpeilung wird in der Peilvorrichtung 17 mittels einer entsprechenden Signalverarbeitung mit den Empfangssignalen der elektroakustischen Wandler 11 oder Staves ein Fächer 13 von Richtfunktionen oder Richtcharakteristiken 14, auch Beamfächer genannt, gebildet, wobei jede Richtcharakteristik 14 (auch Beam genannt) einen kleinen horizontalen und einen relativ großen vertikalen Öffnungswinkel aufweist, der abhängig ist von der Zahl der vertikal untereinander angeordneten Wandlerelemente jedes Wandlers 11. Die Achsen 15 der Richtcharakteristiken 14 oder Beams stellen die Hauptrichtung der Richtcharakteristik dar, in welcher maximale Empfangsempfindlichkeit besteht. Diese sind festgelegt und werden durch einen horizontalen Schwenkwinkel oder Peilwinkel $\beta$ gegenüber der gemeinsamen Bezugsrichtung 16 elektronisch erzeugt.

Zur Bildung der Richtcharakteristik 14 werden im Richtungsbildner 18 die Empfangssignale der Wandler 11 bzw. Staves zeit- oder phasenverzögert, und zwar derart, dass sie für eine bestimmte Empfangs- oder Peilrichtung $\beta_j$ konphas sind. Die gemäß

$$\tau_{i,j} = i \cdot d \cdot \sin \beta_j \, / \, c_{einstell} \qquad (1)$$

berechneten Verzögerungszeiten $\tau_{i,j}$ sind hierzu für alle Empfangsrichtungen j (j=1..m) und alle Wandler 11 oder Staves i (i=0...n) im Richtungsbildner 18 abgespeichert. d ist der horizontale Wandlerabstand auf dem Antennenträger 12 und $c_{einstell}$ der in den Richtungsbildner 18 eingegebene Wert der Schallgeschwindigkeit im Wasser. Als Startwert für $c_{einstell}$ wird der vor Beginn des Peilvorgangs gemessene Wert der Schallgeschwindigkeit $c_{mess}$ am Antennenort genommen. Die hierbei in jeder Empfangsrichtung erhaltenen konphasen Empfangssignale werden zu sog. Gruppensignalen addiert. Im Empfangspegelmesser 19 werden die Pegel der Gruppensignale gemessen und in Zuordnung zu den Empfangsrichtungen j oder den Peilwinkeln $\beta_j$ abgelegt. Ein Pegelmaximumdetektor 20 ermittelt das Pegelmaximum und gibt den Peilwinkel, der dem Gruppensignal mit dem Pegelmaximum zugehörig ist, als Zielpeilung $\beta_{Zk}$ mit k=1,2 ... K aus. Dieses Gruppensignal mit maximalem Pegel repräsentiert die Richtcharakteristik 14, in der ein Schallempfangsmaximum auftritt.

Um die eingangs beschriebenen Peilfehler der Peilvorrichtung 17, die insbesondere für größere Peilwinkel $\beta$ beträchtlich sind, zu reduzieren, wird im Block 21 mit einem Schallausbreitungsmodell der Schallstrahlenverlauf für eine Schallausbreitungsrichtung, die durch die erhaltene Zielpeilung $\beta_{Zk}$ vorgegeben wird, generiert. Solche akustischen Schallausbreitungsmodelle sind vielfach bekannt. Eine Auflistung findet sich in: Heinz G. Urban "Handbuch der Wasserschalltechnik" STN ATLAS Elektronik GmbH, 2000, Seite 305 und 306.

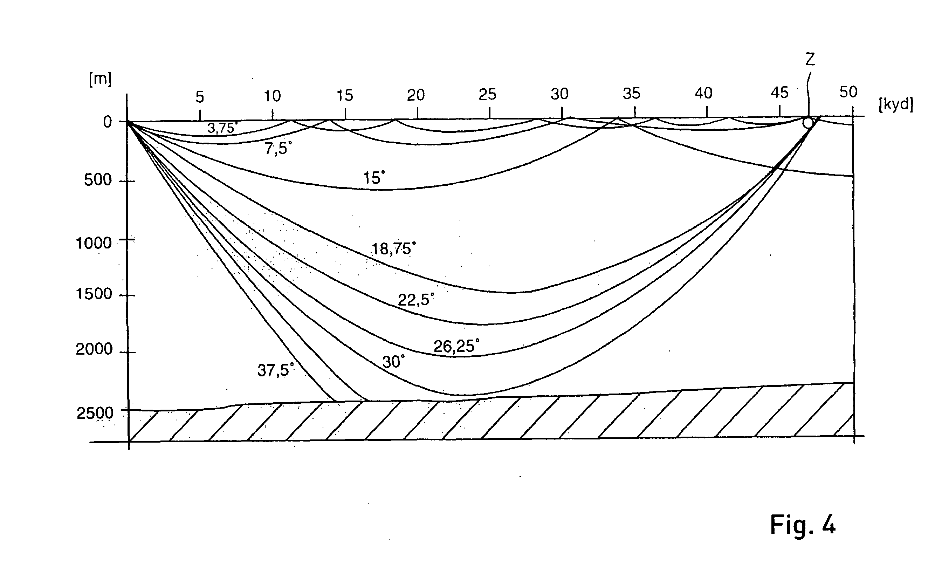

In Fig. 4 ist beispielhaft der berechnete Verlauf der Schallstrahlen innerhalb eines vertikalen Öffnungswinkels der Linearantenne 10 von ca. 75° für eine Schallausbreitungsrichtung, die von einer beispielhaft angenommenen Ziel- peilung $\beta_{z1}$=45° vorgegeben ist, schematisiert dargestellt. Auf der Ordinate sind Tiefenintervalle und auf der Abszisse Entfernungsintervalle aufgetragen. Die schraffierte Fläche stellt den Meeresgrund dar. Aus diesem Schallstrahlenverlauf wird für eine geschätzte Zielentfernung und eine geschätzte Zieltiefe ein vertikaler Schalleinfallswinkel $\gamma$ am Antennenort bestimmt.

In der Darstellung in Fig. 4 liegt der Antennenort in der Nähe des Nullpunkts des Koordinatensystems. Die Zielentfernung ist entweder bekannt oder wird mit anderen Sensoren oder Verfahren geschätzt. Z. B. kann die Zielentfernung aus einem zwecks Datenstützung mitlaufenden Verfahren zur passiven Bestimmung von Zieldaten entnommen werden, wie es z.B. in der DE 101 29 726 A1 beschrieben ist. Sie kann aber auch aus vorangegangenen Zielpeilungen präzisiert werden. Im Diagramm der Fig. 4 ist die Zielentfernung des mit Z gekennzeichneten Ziels mit 47kyd angenommen. Ebenso wird die Zieltiefe geschätzt, hier z.B. mit 10m.

Aus dem Schallstrahlendiagramm wird derjenige vom Ziel Z ausgehende Schallstrahl ermittelt, der am wenigsten gedämpft ist. Im Beispiel der Fig. 4 breiten sich von dem in 10m Tiefe liegenden Ziel Z u.a. zwei Schallstrahlen aus, die unter einem vertikalen Schalleinfallswinkel von 3,75° und 22,5° am Antennenort eintreffen. Die großen Dämpfungen der Schallausbreitung erfolgen durch Reflexionen an der Wasseroberfläche und am Meeresgrund. Während der vom Ziel Z ausgehende Schallstrahl, der unter einem vertikalen Einfallswinkel von 3,75° an die Antenne gelangt, eine Vielzahl von Reflexionen an der Wasseroberfläche erfährt, ist beispielsweise der vom Ziel Z ausgehende und mit einem vertikalen Einfallswinkel von 22,5° an die Antenne gelangende Schallstrahl durch fehlenden Boden- und Oberflächenreflexion nur durch Ausbereitungsverluste im Wasser und damit wesentlich weniger gedämpft. Als vertikaler Einfallswinkel wird daher dieser Einfallswinkel $\gamma_k$ von 22,5° als zu der Zielpeilung $\beta_{z1}$ gehöriger vertikaler Schalleinfallswinkel $\gamma_1$ bestimmt.

Aus dem im Block 21 mittels des Schallausbreitungsmodells erhaltenen vertikalen Schalleinfallswinkel $\gamma_k$ am

Antennenort wird im Korrekturblock 22 ein Korrekturfaktor als Kehrwert des Kosinus des vertikalen Schalleinfallswinkels $\gamma_k$ berechnet. Mit diesem Korrekturfaktor wird der zu Beginn der Peilung zur Bildung der Richtcharakteristiken 14 bzw. der Gruppensignale verwendete Messwert der Schallgeschwindigkeit $c_{mess}$ korrigiert. Hierzu wird die Schallgeschwindigkeit $c_{mess}$ im Schallgeschwindigkeits-Korrekturglied 23 mit dem Korrekturfaktor multipliziert gemäß

$$c_{einstell} = c_{mess} \cdot \frac{1}{\cos \gamma_k} \qquad \text{mit } k = 1, 2 \ldots K \qquad (2).$$

Dieser neue Wert der Schallgeschwindigkeit wird jetzt im Richtungsbildner 18 eingestellt. Mit den dadurch veränderten Verzögerungszeiten $\tau_{i,j}$ des abgelegten Verzögerungszeiten-Satzes wird nunmehr erneut eine Peilung in der vorstehend beschriebenen Weise durchgeführt und dadurch eine verbesserte Zielpeilung $\beta_{Zk}$ erhalten, die bei dem vorgenannten Beispiel einer ersten Zielpeilung von $\beta_{Z1}=45°$ nunmehr zu einer verbesserten Zielpeilung von $\beta_{Z2}=41,3°$ führt.

Bei großen Wassertiefen, ändert sich das Bodenprofil in einem größeren Bereich um die Peilrichtung nicht, so dass auch für die verbesserte Zielpeilung $\beta_{Z2}$ der im Block 21 mittels des Schallausbreitungsmodells berechnete Schallstrahlenverlauf, wie er in Fig. 4 dargestellt ist, seine Gültigkeit behält und somit einen gleichen vertikalen Schalleinfallswinkel von beispielsweise $\gamma_2=22,5°$ liefert. Damit kann der Peilvorgang beendet werden, und die durch die Peilvorrichtung 17 bestimmte verbesserte Zielpeilung $\beta_{Z2}$ wird als Peilung des Ziels $\beta_z$ ausgegeben und angezeigt.

In Flachwassergebieten mit geringer Wassertiefe ändert sich das Bodenprofil in verschiedenen Schallausbreitungsrichtungen, so dass für die neue Zielpeilung im Schallausbreitungsmodell ein anderer Schallstrahlenverlauf berechnen wird und daraus sich ein anderer vertikaler Schalleinfallswinkel $\gamma_k$ ergibt. Für die erhaltene verbesserte Zielpeilung von im Beispiel $\beta_{Z2}=41,3°$ wird der mit dem Schallausbreitungsmodell in Block 21 neu berechnete Schallstrahlenverlauf für die gleiche Zielentfernung und Zieltiefe einen anderen vertikalen Schalleinfallswinkel $\gamma_2$ ergeben. Somit enthält die erhaltene verbesserte Zielpeilung $\beta_{Z2}$ von im Beispiel $\beta_{Z2}=41,3°$ noch einen, wenn auch reduzierten Peilfehler. Um auch diesen zu eliminieren, wird die verbesserte Zielpeilung $\beta_{Zk}$ (im Beispiel $\beta_{Z2}=41,3°$) der gleichen Prozedur unterworfen, wie die zuerst erhaltene Zielpeilung $\beta_{Z(k-1)}$ (im Beispiel $\beta_{Z1}=45°$). Im Block 21 wird mittels des Schallausbreitungsmodells für die verbesserte Zielpeilung $\beta_{Zk}$ (im Beispiel $\beta_{Z2}=41,3°$) erneut der Schallstrahlenverlauf für das in gleicher Entfernung und Tiefe angenommene Ziel Z berechnet. Aus diesem Schallstrahlenverlauf wird jetzt ein neuer vertikaler Schalleinfallswinkel $\gamma_k$ von z.B. $\gamma_3=33,75°$ ermittelt und im Korrekturblock 22 ein neuer Korrekturfaktor durch Berechnung des Kehrwerts des Kosinus dieses neuen vertikalen Schalleinfallswinkels $\gamma_k$ berechnet. Mit dem neuen Schalleinfallswinkel, im Beispiel $\gamma_3=33,75°$, wird der im Richtungsbildner 18 einzustellende neue Wert der Schallgeschwindigkeit $c_{einstell}$ wieder in dem Schallgeschwindigkeits-Korrekturglied 23 nach Gl.(2) berechnet. Mit dem infolge des neuen $c_{einstell}$ im Richtungsbildner 18 veränderten Satz der Zeitverzögerungen wird erneut das Ziel gepeilt, und es ergibt sich eine neue verbesserte Zielpeilung, z.B. $\beta_{Z3}=37,84°$. Dieser beschriebene Vorgang wird solange wiederholt, bis der mit der zuletzt erhaltenen erneut verbesserten Zielpeilung $\beta_{Zk}$ aus dem Schallausbreitungsmodell bestimmte vertikale Schalleinfallswinkel $\gamma_k$ sich in vorgegebenen Grenzen nicht mehr ändert. Ist dies der Fall, so wird die zuletzt von der Peilvorrichtung 17 bestimmte, erneut verbesserte Zielpeilung $\beta_{Zk}$ als Peilung des Ziels $\beta_Z$ ausgegeben und angezeigt. Würde sich in dem zuletzt angegebenen Beispiel der vertikale Schalleinfallswinkel $\gamma_3=33,75°$ nicht mehr ändern, so wäre die Peilung des Ziels $\beta_Z=37,84°$.

Die Gleichheit der in aufeinanderfolgenden Durchgängen k mit dem Schallausbreitungsmodell im Block 21 bestimmten vertikalen Schalleinfallswinkel $\gamma_{k-1}$ und $\gamma_k$ kann in einfacher Weise dadurch bestimmt werden, dass die Differenz des zuletzt mit der erneut verbesserten Zielpeilung $\beta_{Zk}$ erhaltenen vertikalen Schalleinfallswinkels $\gamma_k$ und des zuvor mit der verbesserten Zielpeilung $\beta_{Z(k-1)}$ erhaltenen vertikalen Schalleinfallswinkel $\gamma_{k-1}$ gebildet wird. Unterschreitet diese Differenz $(\gamma_k - \gamma_{k-1})$ einen Vorgabewert S, so ist Gleichheit erreicht und die zuletzt erhaltene, verbesserte Zielpeilung $\beta_{Zk}$ wird als Peilung des Ziels $\beta_Z$ ausgegeben. Hierzu wird beispielsweise der zuvor erhaltene vertikale Schalleinfallswinkel $\gamma_{k-1}$ über einen Speicher oder ein Schieberegister 23 und der nachfolgend erhaltene Schalleinfallswinkel $\gamma_k$ unmittelbar an einen Differenzbildner 24 gelegt und die Differenz in einem Komparator 25 mit dem Vorgabewert S verglichen. Wird dieser Vorgabewert S unterschritten, so wird ein der Peilvorrichtung 17 nachgeschaltetes Tor 26 geöffnet, so dass die zuletzt erhaltene, erneut verbesserte Zielpeilung $\beta_{Zk}$ zur Anzeige 27 gelangt und dort als Peilung des Ziels $\beta_Z$ angezeigt wird.

**Patentansprüche**

1. Verfahren zum Peilen eines schallabgebenden Ziels mittels einer langgestreckten, mehrere elektroakustische Wandler (11) aufweisenden Unterwasserantenne, bei dem aus den Empfangssignalen der Wandler unter Einbeziehung eines vorgegebenen, insbesondere am Antennenort gemessenen Wertes ($c_{mess}$) der Schallgeschwindigkeit im Wasser richtungsselektiv eine horizontale Zielpeilung ($\beta_{Zk}$) bestimmt wird, **gekennzeichnet durch** folgende Verfahrensschritte:

- mit einem Schallausbreitungsmodell wird der Schallstrahlenverlauf in einer mit der bestimmten Zielpeilung ($\beta_{Zk}$) übereinstimmenden Schallausbreitungsrichtung berechnet,
- aus dem Schallstrahlenverlauf wird für eine geschätzte Zielentfernung und eine geschätzte Zieltiefe ein vertikaler Schalleinfallswinkel ($\gamma_k$) am Antennenort bestimmt,
- aus dem vertikalen Schalleinfallswinkel ($\gamma_k$) wird ein Korrekturfaktor abgeleitet,
- der vorgegebene Wert ($c_{mess}$) der Schallgeschwindigkeit wird **durch** Multiplikation mit dem Korrekturfaktor korrigiert und
- mit dem korrigierten Wert der Schallgeschwindigkeit ($c_{einstell}$) wird erneut eine, jetzt verbesserte Zielpeilung ($\beta_{Zk}$) bestimmt.

2. Verfahren nach Anspruch 1, **dadurch gekennzeichnet, dass** mit der verbesserten Zielpeilung ($\beta_{Zk}$) die zusätzlichen Verfahrensschritte iterativ solange wiederholt werden, bis der mit der jeweils erneut verbesserten Zielpeilung ($\beta_{Zk}$) bestimmte vertikale Schalleinfallswinkel ($\gamma_k$) sich nicht mehr oder nur noch unwesentlich ändert, und dass die zuletzt erhaltene Zielpeilung ($\beta_{Zk}$) als Peilung ($\beta_Z$) zum Ziel ausgegeben wird.

3. Verfahren nach Anspruch 1 oder 2, **dadurch gekennzeichnet, dass** als Korrekturfaktor der Kehrwert des Kosinus des vertikalen Schalleinfallswinkels berechnet wird.

4. Verfahren nach einem der Ansprüche 1 bis 3, **dadurch gekennzeichnet, dass** die geschätzte Zielentfernung und die geschätzte Zieltiefe aus vorangegangenen Zielpeilungen oder mit anderen Sensoren und/oder Zieldatenbestimmungsverfahren ermittelt werden.

5. Verfahren nach einem der Ansprüche 1 bis 4, **dadurch gekennzeichnet, dass** mit dem Schallausbreitungsmodell alle Schallstrahlen berechnet werden, die in einen vertikalen Empfangssektor der Unterwasserantenne (10) einfallen, und für die Schallstrahlen sich ergebende vertikale Einfallswinkel und Dämpfungen für jedes Entfernungs- und Tiefintervall angegeben werden und dass zur Bestimmung des vertikalen Schalleinfallswinkel ($\gamma_k$) der Einfallswinkel desjenigen Schallstrahls ermittelt wird, der ausgehend von dem Ziel in der geschätzten Zielentfernung und Zieltiefe die geringste Dämpfung erfährt.

6. Verfahren nach einem der Ansprüche 1 bis 5, **dadurch gekennzeichnet, dass** zur Bestimmung der Zielpeilung ($\beta_{Zk}$) aus den Empfangssignalen der Wandler (11) ein Fächer von Richtcharakteristiken (14) gebildet wird, die einen horizontalen und einen vertikalen Öffnungswinkel und eine gegenüber einer gemeinsamen Bezugslinie (16) geschwenkte Hauptrichtung (15) maximaler Empfangsempfindlichkeit aufweisen, und der Schwenkwinkel der Hauptrichtung (15) derjenigen Richtcharakteristik (14), in der ein Schallempfangsmaximum auftritt, als Zielpeilung ($\beta_{Zk}$) angegeben wird.

**Claims**

1. Method for finding the bearing of a sound-emitting target by means of an elongated underwater antenna which has a plurality of electroacoustic transducers (11), in which a horizontal target bearing ($\beta_{Zk}$) is determined on a directionally selective basis from the signals received by the transducers and including a predetermined value ($c_{mess}$), measured in particular at the antenna location, of the speed of sound in water, **characterized by** the following method steps:

- the sound ray profile in a sound propagation direction which matches the specific target bearing ($\beta_{Zk}$) is calculated using a sound propagation model,
- a vertical sound incidence angle ($\gamma_k$) at the antenna location is determined from the sound ray profile for an estimated target range and an estimated target depth,
- a correction factor is determined from the vertical sound incidence angle ($\gamma_k$),
- the predetermined value ($c_{mess}$) of the speed of sound is corrected by multiplication by the correction factor, and
- a target bearing (($\beta_{Zk}$), which has now been improved, is determined once again using the corrected value of the speed of sound ($c_{einstell}$).

**2.** Method according to Claim 1, **characterized in that** the additional method steps are repeated iteratively using the improved target bearing ($\beta_{Zk}$) until the vertical sound incidence angle ($\gamma_k$) determined using the respective target bearing ($\beta_{Zk}$) which has once again been improved no longer changes or changes only insignificantly, and **in that** the most recently obtained target bearing ($\beta_{Zk}$) is output as the bearing ($\beta_Z$) to the target.

**3.** Method according to Claim 1 or 2, **characterized in that** the reciprocal of the cosine of the vertical sound incidence angle is calculated as the correction factor.

**4.** Method according to one of Claims 1 to 3, **characterized in that** the estimated target range and the estimated target depth are determined from previous target bearings or using other sensors and/or target data determination methods.

**5.** Method according to one of Claims 1 to 4, **characterized in that** the sound propagation model is used to calculate all the sound rays which occur in a vertical reception sector of the underwater antenna (10), and vertical incidence angles and attenuations which result from the sound rays are indicated for each range interval and depth interval, and **in that**, in order to determine the vertical sound incidence angle ($\gamma_k$), the incidence angle is determined of that sound ray which is subject to the least attenuation, starting from the target at the estimated target range and target depth.

**6.** Method according to one of Claims 1 to 5, **characterized in that** a fan of directional characteristics (14) is formed from the signals received by the transducers (11) in order to determine the target bearing ($\beta_{Zk}$), which directional characteristics (14) have a horizontal and a vertical beam angle and a main direction (15) of maximum reception sensitivity, which is scanned with respect to a common reference line (16), and the scan angle of the main direction (15) of that directional characteristic (14) in which a sound reception maximum occurs is indicated as the target bearing ($\beta_{Zk}$).

**Revendications**

**1.** Procédé de localisation d'une cible émettrice de sons au moyen d'une antenne sous-marine allongée comportant une pluralité de transducteurs électroacoustiques (11), dans lequel un relèvement horizontal ($\beta_{Zk}$) de la cible est déterminé à partir des signaux de réception des transducteurs en tenant compte d'une valeur prédéterminée, mesurée notamment à la position de l'antenne ($c_{mess}$) de la vitesse du son dans l'eau de manière directionnellement sélective, **caractérisé par** les étapes de procédé suivantes :

- le trajet de rayonnement acoustique est calculé au moyen d'un modèle de propagation du son dans une direction de propagation du son coïncidant avec le relèvement ($\beta_{Zk}$) déterminé de la cible,
- un angle d'incidence acoustique vertical ($\gamma_k$) est déterminé à la position de l'antenne à partir du trajet du rayonnement acoustique pour une distance estimée de la cible et une profondeur estimée de la cible,
- un facteur de correction est déduit de l'angle d'incidence acoustique vertical ($\gamma_k$),
- la valeur prédéterminée ($c_{mess}$) de la vitesse du son est corrigée par multiplication par le facteur de correction, et
- un relèvement ($\beta_{Zk}$) amélioré de la cible est ensuite à nouveau déterminé à partir de la valeur corrigée de la vitesse du son ($c_{einstell}$).

**2.** Procédé selon la revendication 1, **caractérisé en ce que** en partant du relèvement ($\beta_{Zk}$) amélioré de la cible, les étapes du procédé sont en outre répétées de manière itérative jusqu'à ce que l'angle d'incidence vertical ($\gamma_k$) déterminé à partir de chaque relèvement ($\beta_{Zk}$) amélioré à nouveau de la cible ne varie plus ou ne varie que de manière négligeable, et **en ce que** le dernier relèvement ($\beta_{Zk}$) de cible obtenu est délivré en tant que relèvement ($\beta_Z$) de la cible.

**3.** Procédé selon la revendication 1 ou 2, **caractérisé en ce que** le facteur de correction est calculé comme étant l'inverse du cosinus de l'angle d'incidence acoustique vertical.

**4.** Procédé selon l'une des revendications 1 à 3, **caractérisé en ce que** la distance estimée de la cible et la profondeur estimée de la cible sont obtenues à partir de relèvements précédents de la cible au moyen d'autres capteurs et/ou d'autres procédés de détermination de données de cible.

**5.** Procédé selon l'une des revendications 1 à 4, **caractérisé en ce qu'**à partir du modèle de propagation du son, tous les rayons acoustiques qui sont incidents dans un secteur de réception vertical de l'antenne sous-marine (10) sont calculés, et les angles d'incidence verticaux et les affaiblissements correspondant aux rayons acoustiques pour chaque distance et chaque intervalle de profondeur sont déterminés, et **en ce que**, pour la détermination de l'angle d'incidence acoustique vertical ($\gamma_k$), l'angle d'incidence de chaque rayon acoustique subissant l'affaiblissement le moins élevé est obtenu, en partant de la cible pour la distance de cible et la profondeur de cible estimée.

6. Procédé selon l'une des revendications 1 à 5, **caractérisé en ce que**, pour la détermination du relèvement ($\beta_{Zk}$) de la cible à partir des signaux de réception des transducteurs (11), un éventail de caractéristiques directionnelles (14) est élaboré, lesquelles caractéristiques comprennent des angles d'ouverture horizontal et vertical et une direction principale (15) de sensibilité de réception maximale pivotée par rapport à une ligne de référence (16) commune, et l'angle de pivotement de la direction principale (15) de chaque caractéristique directionnelle (14) dans laquelle il se produit un maximum de réception acoustique, est délivré en tant que relèvement ($\beta_{Zk}$) de la cible.

Fig.1

Fig. 2

Fig. 3

Fig. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 01308745 B1
- DE 4207716 A1
- DE 10129726 A1

### In der Beschreibung aufgeführte Nicht-Patentliteratur

- **Heinz G. Urban.** Handbuch der Wasserschalltechnik. 2000, 305, 306